# EUROPÄISCHE PATENTSCHRIFT

(11) **EP 2 061 667 B1**
(45) Veröffentlichungstag und Bekanntmachung des Hinweises auf die Patenterteilung: **18.06.2014**
(21) Anmeldenummer: 07817498.4
(22) Anmeldetag: 12.09.2007
(51) Int. Cl.: B60J 7/14

(54) **HARDTOP-FALTDACH**
RETRACTABLE HARDTOP
TOIT EN DUR RETRACTABLE

(30) Priorität: 12.09.2006 DE 102006042694
(43) Veröffentlichungstag der Anmeldung: 27.05.2009
(73) Patentinhaber: Webasto SE, 82131 Stockdorf (DE)
(72) Erfinder: LANGGUTH, Martin, 82131 Gauting (DE)
(74) Vertreter: Fischer & Konnerth
(86) Internationale Anmeldenummer: PCT/DE2007/001625
(87) Internationale Veröffentlichungsnummer: WO 2008/031414

(56) Entgegenhaltungen:
- EP-A- 1 398 195
- EP-A- 1 652 709
- EP-A- 1 681 195
- DE-A1- 10 108 493
- DE-B3-102004 010 095
- DE-C1- 4 445 580

## Beschreibung

Die Erfindung betrifft ein Hardtop-Faltdach mit den Merkmalen des Oberbegriffs des Anspruchs 1.

Es ist bekannt, ein Hardtop-Faltdach derart aufzubauen, dass an dem zumindest einen starren Dachschalenteil Funktionseinrichtungen in Form von Mechanikteilen der Dachkinematik, Verriegelungen, Schlösser oder Antriebe als eigenständige Bauteile oder Baueinheiten angebracht werden. Das Dachschalenteil dient somit als Träger aller weiterer Bauteile oder Komponenten des Daches. Eine Funktionsprüfung des Daches kann somit erst nach dem vollständigen Aufbau des Daches erfolgen. Gegebenenfalls auftretende Funktionsfehler des vollständigen Daches müssen dann in aufwändiger Weise nachjustiert werden.

Die DE 102 40 567 B4 offenbart ein Hardtop-Fahrzeugdach, das mindestens zwei Dachteile mit starren Dachschalenteilen enthält, wobei die Dachteile durch Betätigung einer Stell- oder Verdeckkinematik zwischen einer Schließposition und einer Ablageposition verstellbar und in Schließposition in Fahrzeuglängsrichtung hintereinander liegend angeordnet sind. Eine Verriegelungseinrichtung ist an den Dachschalenteilen angebracht, so dass in Schließposition die benachbarten Dachteile bzw. Dachschalenteile gegenseitig über Verbindungselemente verriegelbar sind, die als an einem Dachteil gehaltene Verriegelungsbolzen ausgeführt sind, die über eine Antriebseinheit in Fahrzeuglängsrichtung zwischen einer Verriegelungsposition und einer Entriegelungsposition verschiebbar sind.

Die DE 10 2004 010 095 B3 zeigt ein gattungsgemäßes Hardtop-Faltdach mit einem festen Verdeck- oder Dachteil, das über Dachteillenker mit einem Verdeckgestänge verbunden ist, und mit einem formsteifen Abdeckelement, das über ein Gelenk mit einem Hauptlenker des Verdeckgestänges verbunden ist, mittels eines Federelements kraftbeaufschlagt ist sowie mittels Zugmitteln mit dem Verdeckgestänge verbunden ist. Das Abdeckelement stellt eine Funktionseinrichtung dar, die ausschließlich an dem Verdeckgestänge angebracht ist.

Die EP 1 681 195 A2 zeigt ein Hardtop-Fahrzeugdach mit zumindest zwei Dachteilen und einer Verriegelungsvorrichtung zum Verriegeln zumindest eines Dachteils gegen ein angrenzendes Bauteil, wobei das vordere Dachteil gegen einen Windlauf als angrenzendes Bauteil oder die beiden Dachteile oder drei Dachteile untereinander verriegelbar sind.

Der Erfindung liegt die Aufgabe zugrunde, ein eingangs genanntes Hardtop-Faltdach zu schaffen, das mit geringerem Aufwand herstellbar ist.

Die Aufgabe wird erfindungsgemäß durch ein Hardtop-Faltdach mit den Merkmalen des Anspruchs 1 gelöst. Vorteilhafte Ausgestaltungen der Erfindung sind in den Unteransprüchen angegeben.

Da auch die Funktionseinrichtung an der Dachkinematik und nicht an dem Dachschalenteil angebracht ist, kann das gesamte Faltdach mit seinen Komponenten und der Funktionseinrichtung außerhalb eines Fahrzeugs vormontiert und auf seine Funktionsfähigkeit überprüft werden, bevor schließlich das Dachschalenteil zum Komplettieren des Faltdaches ebenfalls an der Dachkinematik angebracht wird. Damit ist das Dachschalenteil einfacher aufgebaut, da Befestigungen für zusätzliche Funktionseinrichtungen nicht erforderlich sind. Des weiteren ist das Dachschalenteil durch den einfachen Aufbau leicht austauschbar, so dass es ohne weiteres am Fahrzeug gegen ein anderes Dachschalenteil gewechselt werden kann, z. B. im Reparaturfall oder aus ästhetischen Gründen, wenn es z. B. gegen ein andersfarbiges Dachschalenteil oder ein Dachschalenteil aus anderem Material oder in anderer Gestaltung ausgetauscht werden soll.

Die Verriegelungseinrichtung bzw. das Schloss kann zwei Dachteile untereinander verriegeln oder ein Dachteil an einem Windlauf oder an einer heckseitigen Fahrzeugstruktur oder einem Verdeckkastendeckel in Schließstellung des Dachteils bzw. der Dachteile festlegen. Andererseits kann ein Dachteil auch in Offenstellung gegen ein anderes Dachteil oder ein anderes Teil des Fahrzeugs verriegelt gehalten werden.

In bevorzugter Gestaltung ist vorgesehen, dass die Verriegelungseinrichtung bzw. das Schloss zumindest ein bewegbares Stellelement enthält. Ein derartiges bewegbares Stellelement kann beispielsweise zum Ver- oder Entriegeln oder Koppeln und Entkoppeln von Bauteilen des Faltdaches vorgesehen sein.

Vorzugsweise enthält die Dachkinematik ein Trägerteil, das Befestigungsstellen zum Anbringen des Dachschalenteils aufweist.

Gemäß einer bevorzugten Gestaltung enthält die Dachkinematik ein vorderes Trägerteil eines vorderen Dachteils und ein hinteres Trägerteil des hinteren Dachteils, an denen das vordere Dachschalenteil bzw. das hintere Dachschalenteil festlegbar sind.

Bei einem Verfahren zum Herstellen eines Hardtop-Faltdaches mit zumindest einem ein starres Dachschalenteil aufweisenden Dachteil ist vorgesehen, dass zunächst eine Dachkinematik montiert wird, dass anschließend an der Dachkinematik zumindest eine Funktionseinrichtung angebracht wird, dass die mit der Funktionseinrichtung ergänzte Dachkinematik auf einem Prüfstand einer Funktionsprüfung unterzogen wird, und dass zum Komplettieren des Hardtop-Faltdaches das Dachschalenteil an der Dachkinematik angebracht wird.

Bei diesem Verfahren wird somit zunächst das ohne starres Dachschalenteil bzw. ohne starre Dachschalenteile vorgefertigte Faltdach an einen Prüfstand angebracht, der z. B. eine Aufbaulehre entsprechend einem Hauptlager der Karosserie eines Cabriolets sowie eine vordere Schlosslehre für zwei vordere Schlösser und eine hintere Schlosslehre für zwei hintere Schlösser enthält. An dem Prüfstand erfolgt der Funktionstest des Faltdaches, der insbesondere die Antriebsbewegungen beim Öffnen und beim Schließen des Faltdaches sowie Ver- und Entriegelungsvorgänge der unterschiedlichen Schlösser umfasst, wobei die Bewegungen der Dachkinematik noch ohne das bzw. die Dachschalenteile erfolgt. Diese werden nach erfolgreichem Absolvieren der Prüfungen montiert und einjustiert, wobei keine Veränderungen der Funktionseinrichtungen oder zugehöriger Bauteile erforderlich ist.

Nachfolgend wird ein erfindungsgemäßes Hardtop-Faltdach anhand eines Ausführungsbeispiels unter Bezugnahme auf die Zeichnung näher erläutert. Es zeigt:
- Fig. 1: in einer Seitenansicht in schematischer Darstellung ein Cabriolet mit einem Klappdach in Schließstellung;
- Fig. 2: in einer Seitenansicht in schematischer Darstellung das Cabriolet mit geöffneter Kofferraumklappe;
- Fig. 3: in einer Seitenansicht in schematischer Darstellung das Cabriolet beim Öffnen des Klappdaches in einer ersten Zwischenstellung;
- Fig. 4: in einer Seitenansicht in schematischer Darstellung das Cabriolet beim Öffnen des Klappdaches in einer zweiten Zwischenstellung;
- Fig. 5: in einer Seitenansicht in schematischer Darstellung das Cabriolet beim Öffnen des Klappdaches in einer zweiten Zwischenstellung und mit hochgeschwenktem Verdeckkastendeckel und Kofferraumdeckel;
- Fig. 6: in einer Seitenansicht in schematischer Darstellung das Cabriolet beim Öffnen des Klappdaches mit hochgeschwenktem Verdeckkastendeckel und Kofferraumdeckel, wobei die beiden Klappdachteile in einer Zwischenstellung vor dem Verdeckablageraum dargestellt sind;
- Fig. 7: in einer Seitenansicht in schematischer Darstellung das Cabriolet mit in den Verdeckablageraum abgelegten Dachteilen bei noch geöffnetem Verdeckkastendeckel und Kofferraumdeckel;
- Fig. 8: in einer Seitenansicht in schematischer Darstellung das Cabriolet mit in den Verdeckablageraum abgelegten Dachteilen bei geschlossenem Verdeckkastendeckel und Kofferraumdeckel;
- Fig. 9: in einer Seitenansicht die gesamte Dachkinematik bei geschlossenem Dach;
- Fig. 10: in perspektivischer Draufsicht die Dachkinematik im Bereich des hinteren Dachteils bei geschlossenem Dach;
- Fig. 11: in perspektivischer Draufsicht die Dachkinematik im Bereich des vorderen Dachteils bei geschlossenem Dach;
- Fig. 12: in perspektivischer Draufsicht die Dachkinematik des vorderen Dachteils und des hinteren Dachteils bei geschlossenem Dach in einer ersten Stellung einer Antriebseinrichtung zum Verstellen des hinteren Dachteils;
- Fig. 13: in perspektivischer Draufsicht die Dachkinematik des vorderen Dachteils und des hinteren Dachteils bei geschlossenem Dach in einer zweiten Stellung der Antriebseinrichtung;
- Fig. 14: in einer Seitenansicht die Dachkinematik des hinteren Dachteils mit einer von der Antriebseinrichtung betätigbaren Riegeleinrichtung bei angehobenem hinteren Dachteil;
- Fig. 15: in perspektivischer Draufsicht die Dachkinematik des vorderen Dachteils und des hinteren Dachteils bei geschlossenem Dach in einer dritten Stellung der Antriebseinrichtung beim Hochschwenken des hinteren Dachteils;
- Fig. 16: in perspektivischer Draufsicht die Dachkinematik des vorderen Dachteils und des hinteren Dachteils bei geschlossenem Dach in einer vierten Stellung der Antriebseinrichtung, wobei das hintere Dachteil über das vordere Dachteil geschwenkt ist;

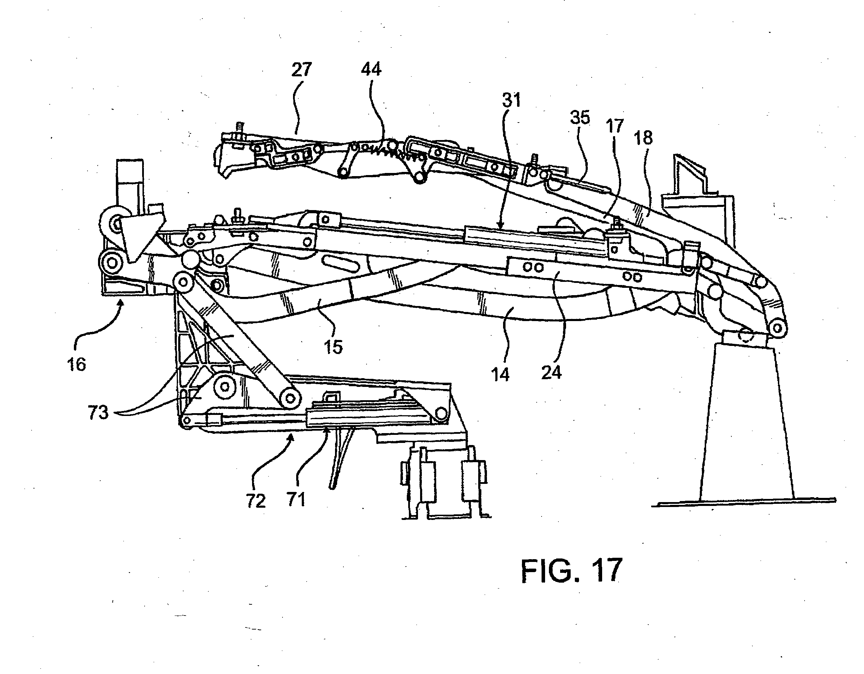

- Fig. 17: in einer Seitenansicht die Dachkinematik bei vollständig geöffnetem Dach;
- Fig. 18: in einer Seitenansicht die Dachkinematik des vorderen Dachteils bei geschlossenem Dach mit einer Riegelsteineinrichtung in einer ersten Stellung gemäß Fig. 12;
- Fig. 19: in einer Seitenansicht die Dachkinematik des vorderen Dachteils bei geschlossenem Dach mit der Riegelsteineinrichtung in einer zweiten Stellung gemäß Fig. 13;
- Fig. 20: in einer Seitenansicht die Dachkinematik des vorderen Dachteils bei geschlossenem Dach mit der Riegelsteineinrichtung in einer dritten Stellung;
- Fig. 21: in einer Seitenansicht die Dachkinematik des vorderen Dachteils bei geschlossenem Dach mit der Riegelsteineinrichtung in einer vierten Stellung;
- Fig. 22: in perspektivischer Draufsicht die Dachkinematik im Bereich des hinteren Dachteils bei geschlossenem Dach mit einem hinteren Schloß in Riegelstellung am Vorderrand des Verdeckkastendeckels;
- Fig. 23: in perspektivischer Draufsicht entsprechend Fig. 22 das hintere Schloß in Offenstellung;
- Fig. 24: in perspektivischer Draufsicht ein Innenhimmel des Daches des Cabriolets;
- Fig. 25: in perspektivischer Draufsicht in vergrößerter Darstellung der Innenhimmel;
- Fig. 26: in perspektivischer Ansicht die Unterseite eines an der Dachkinematik des vorderen Dachteils angebrachten vorderen Dachschalenteils;
- Fig. 27: in perspektivischer Ansicht die Unterseite eines an der Dachkinematik des hinteren Dachteils angebrachten hinteren Dachschalenteils;
- Fig. 28: in einer Seitenansicht in schematischer Darstellung das Cabriolet mit abgelegtem Dach und einer im Verdeckkastendeckel angeordneten Riegelaufnahme;
- Fig. 29: in einer Seitenansicht in schematischer Darstellung das Cabriolet mit geschlossenem Dach und einer Variante der Verriegelungseinrichtung am Verdeckkastendeckel; und
- Fig. 30: in einer Seitenansicht in schematischer Darstellung das Cabriolet gemäß Fig. 29 mit einer weiteren Variante der Verriegelungseinrichtung am Verdeckkastendeckel.

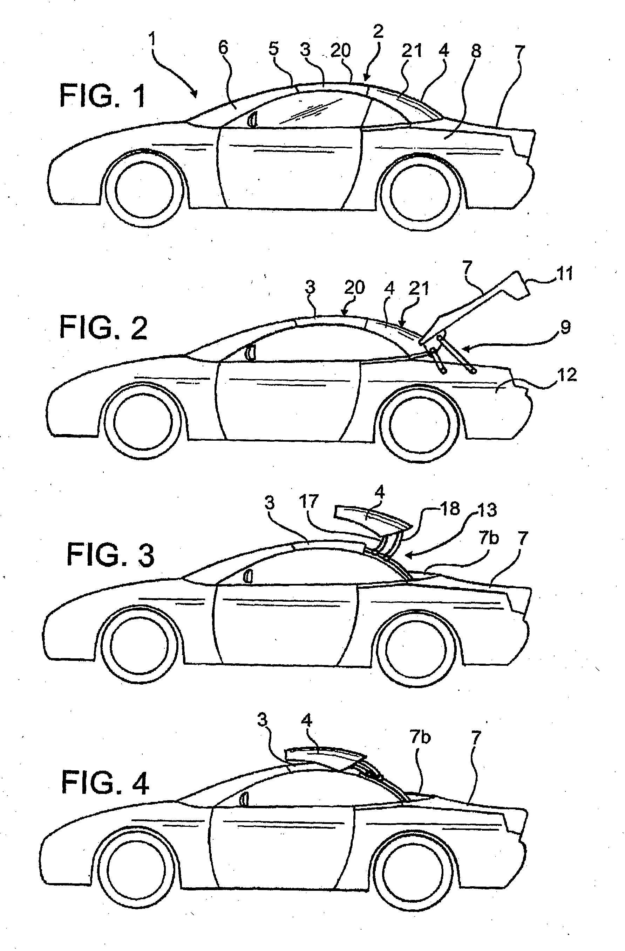

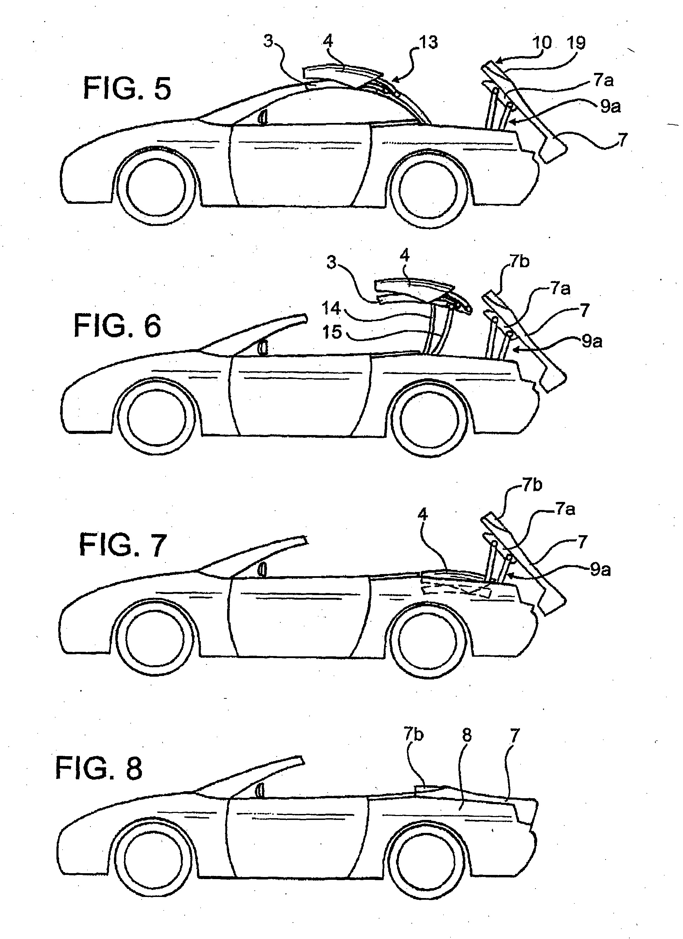

Ein Cabriolet 1 enthält ein Klappverdeck oder Hardtop-Faltdach 2, das z. B. als zweiteiliges Dach mit einem vorderen Dachteil 3 und einem hinteren Dachteil 4 gebildet ist, die mittels einer Dachkinematik zwischen einer Schließstellung, in der sie den Fahrzeuginnenraum von einem Windlauf 5 oberhalb der Frontscheibe 6 bis zu einem heckseitigen Kofferraumdeckel 7 überdecken (Fig. 1 und 2), und einer Ablagestellung, in der sie in einem heckseitigen Verdeckablageraum 8 übereinander geschichtet angeordnet sind (Fig. 7 und 8), verstellbar sind.

Der Kofferraumdeckel 7 ist mittels einer Lagereinrichtung 9 (in Fig. 2 schematisch dargestellt, z. B. eine Lenkereinrichtung in Mehrgelenkanordnung) an einem Träger 7a (in den Fig. 5 bis 7 dargestellt) schwenkbar gelagert, der wiederum über eine Lagereinrichtung 9a (z. B. eine Lenkereinrichtung in Viergelenkanordnung) an der Karosserie schwenkbar gelagert ist. An dem Träger 7a ist ein Verdeckkastendeckel 7b fest angeordnet, der bei geschlossenem Kofferraumdeckel 7 vorderseitig an diesen angrenzt bzw. dessen vorderseitige flächige Verlängerung bildet. Zum Freigeben eines Bewegungsweges für das Faltdach 2 bei dessen Ablegen in den Verdeckablageraum 8 wie auch bei dessen Ausfahren aus dem Verdeckablageraum 8 wird der Träger 7a mit dem Verdeckkastendeckei 7b und dem am Träger 7a in Schließstellung angeordneten Kofferraumdeckel 7 nach hinten verschwenkt (Fig. 5), wobei sich ein Vorderrand 10 des Verdeckkastendeckels 7b anhebt. Der Kofferraumdeckel 7 kann durch Anheben seines Hinterrandes 11 und damit Verschwenken gegenüber dem Träger 7a in eine Ladestellung verstellt werden (Fig. 2), in der der Kofferraum 12 des Cabriolets zum Be- und Entladen zugänglich ist. Ein derartiger Kofferraumdeckel 7 ist z. B. aus der DE 44 45 944 C1 oder der DE 199 32 500 A1 grundsätzlich bekannt.

Das Faltdach 2 ist im wesentlichen symmetrisch zur Fahrzeuglängsachse des Cabriolets aufgebaut und die Dachkinematik 13 (Fig. 3) zum Lagern und Verstellen der beiden Dachteile 3 und 4 weist ebenfalls eine gleichartige beidseitige Bauteilanordnung symmetrisch zur Fahrzeuglängsachse auf.

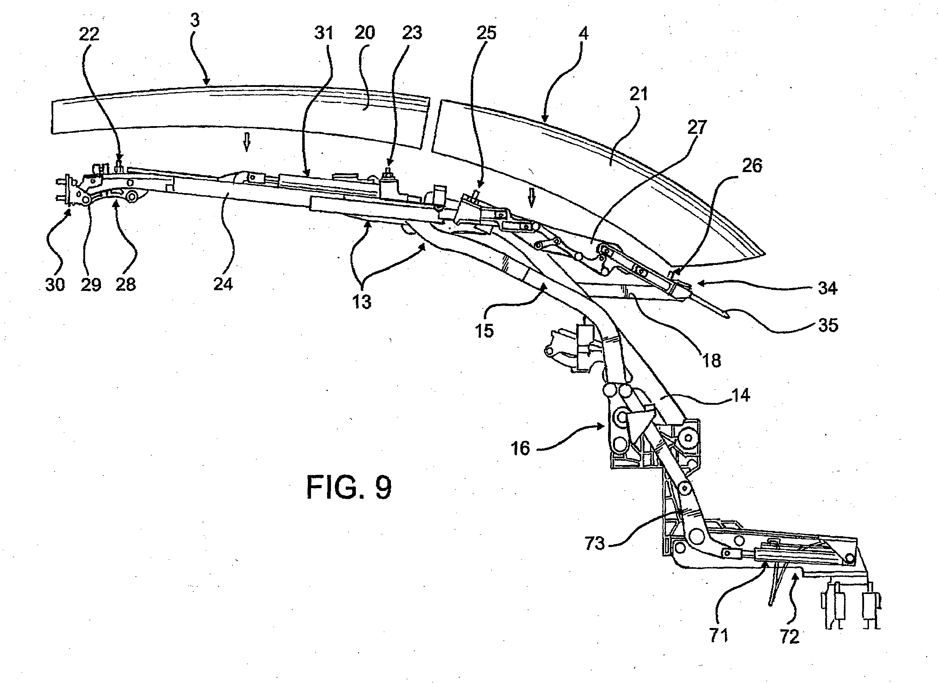

Das vordere Dachteil 3 ist mittels einer Lagereinrichtung in Gestalt eines einen Hauptlenker 14 und eine Hauptsäule 15 aufweisenden Hauptviergelenks an einem karosseriefesten Hauptlager 16 (Fig. 9) schwenkbar gelagert. Das hintere Dachteil 4 ist mittels eines Viergelenks, das einen vorderen Lenker 17 und einen hinteren Lenker 18 aufweist, am vorderen Dachteil 3 oder an dessen Lagerung schwenkbar gelagert. Ein Dach mit einer derartigen Lagerung ist grundsätzlich z. B. aus der EP 1 112 879 A2 bekannt.

Zum Öffnen und Ablegen des geschlossenen Daches 2 wird zunächst das hintere Dachteil 4 aus seiner Schließstellung, in der es am Vorderrand 10 des Verdeckkastendeckels 7b, an dem eine Hutablage 19 angebracht sein kann oder der eine Hutablage 19 darstellen kann, dicht aufliegt (siehe Fig. 1), nach oben aufgeschwenkt (Fig. 3) und nach vorne über das vordere Dachteil 3 geschwenkt (Fig. 4). Anschließend oder schon während dieser Bewegung wird der Träger 7a mit dem Verdeckkastendeckei 7b und dem Kofferraumdeckel 7 nach hinten geöffnet (Fig. 5), so dass der Bewegungs- oder Ablageweg für das Dach 2 freigelegt ist und mittels des Hauptviergelenks 14, 15 das vordere Dachteil 3 mit dem darauf angeordneten hinteren Dachteil 4 in den Verdeckablageraum 8 in seine Ablagestellung eingeschwenkt werden kann (Fig. 6 und 7). Zuletzt wird der der Träger 7a mit dem Verdeckkastendeckel 7b und dem Kofferraumdeckel 7 wieder in seine herabgeschwenkte Schließstellung verstellt (Fig. 8). Der Schließvorgang des geöffneten Daches 2 erfolgt in entgegengesetztem Bewegungsablauf.

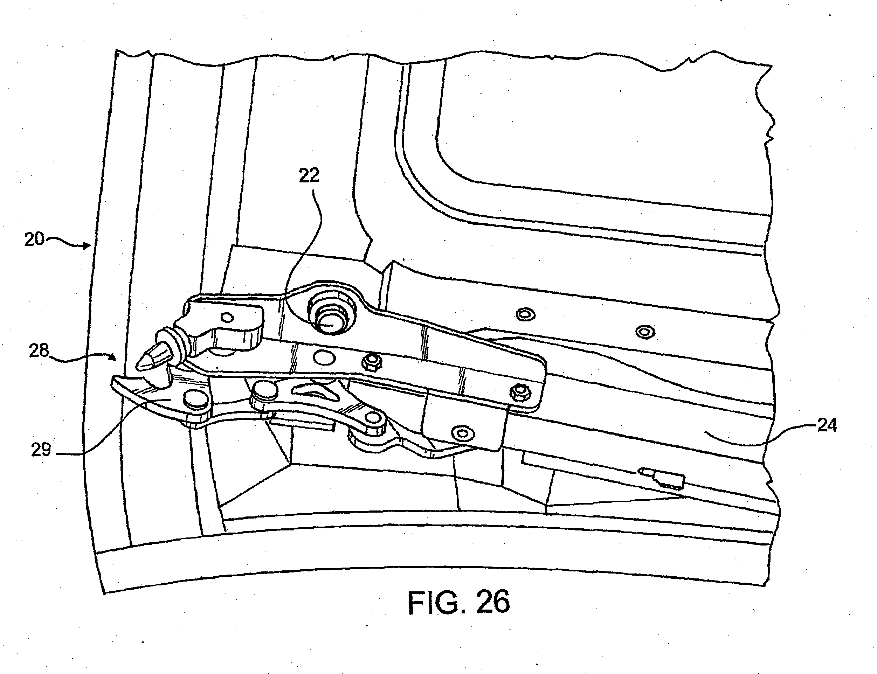

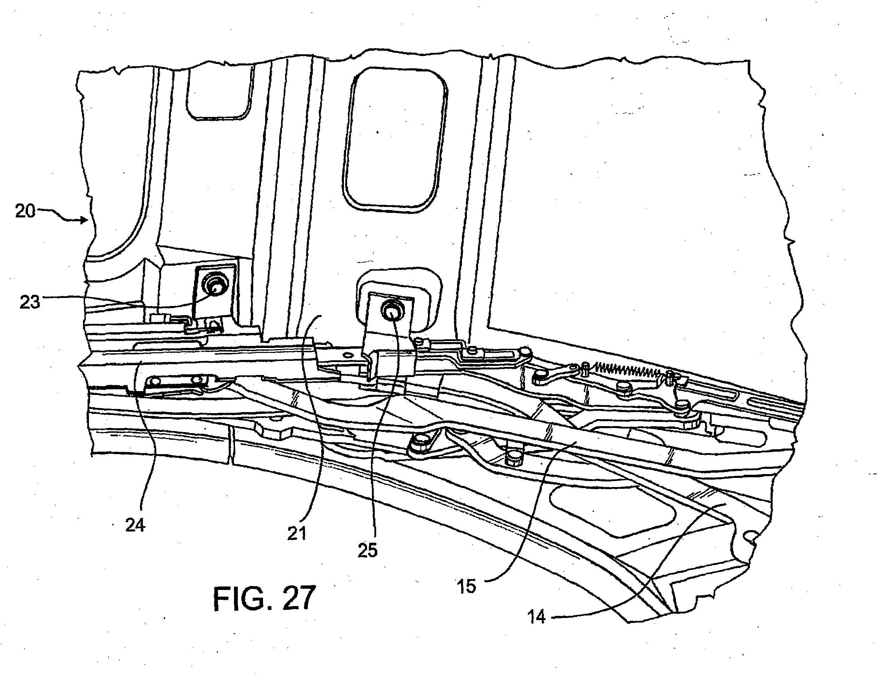

Das vordere Dachteil 3 und das hintere Dachteil 4 enthalten ein vorderes Dachschalenteil 20 bzw. ein hinteres Dachschalenteil 21 (siehe schematische Darstellung in Fig. 9), die die starre Außenhaut des Faltdaches 2 bilden. Das vordere Dachschalenteil 20 ist seitlich jeweils an einer vorderen und einer hinteren Befestigungsstelle 22 bzw. 23 eines vorderen Trägerteils 24 angebracht (siehe auch Fig. 26 und 27). Das rahmenartige vordere Trägerteil 24 bildet ein Bauteil des Hauptviergelenks 14, 15 der Dachkinematik 13 und enthält die oberen Gelenkanbindungen des Haupttenkers 14 und der Hauptsäule 15. Das hintere Dachschalentell 21 ist seitlich jeweils an einer vorderen und einer hinteren Befestigungsstelle 25 bzw. 26 eines hinteren Trägerteils 27 angebracht. Das rahmenartige hintere Trägerteil 27 bildet entsprechend dem vorderen Trägerteil 24 ein Bauteil des das hintere Dachteil 4 lagernden Viergelenks und enthält die oberen Gelenkanbindungen der beiden Lenker 17 und 18. Die beiden Dachschalenteile 20 und 21 können an den Trägerteilen 24 und 27 beispielsweise mittels Schraubverbindungen befestigt werden, die insbesondere eine Lagejustierung ermöglichen.

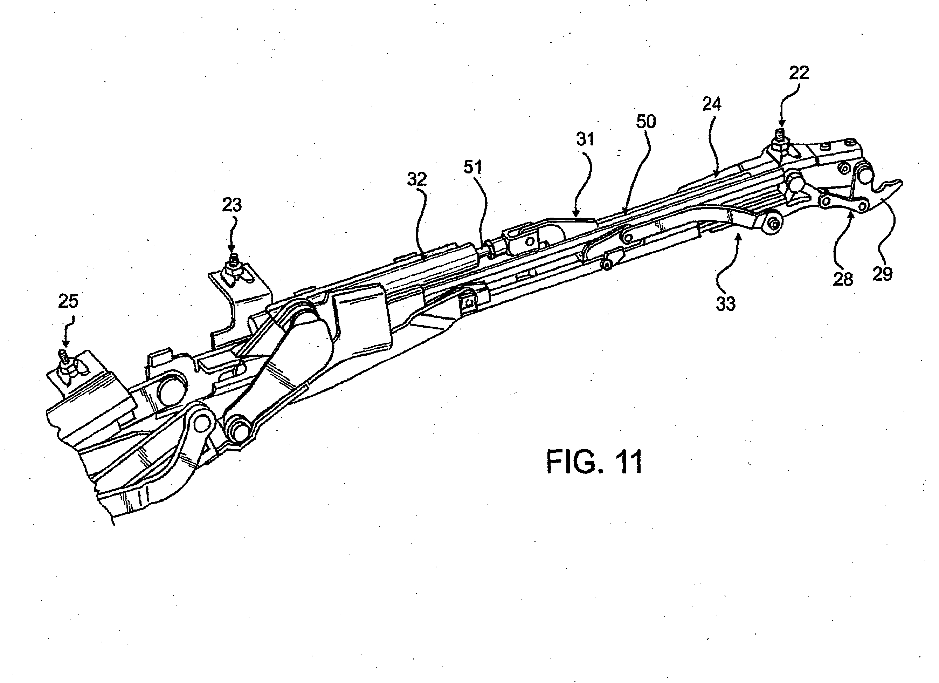

Eine Riegeleinrichtung des Faltdaches 2 enthält ein vorderes Schloß 28, das am vorderen Trägerteil 24 angeordnet ist und dieses Trägerteil 24 und damit das vordere Dachteil 3 bei geschlossenem Dach 2 am Windlauf 5 mittels eines schwenkbar gelagerten Riegelhakens 29 an einem Gegenlager 30 des Windlaufs 5 verriegelt hält. Die Betätigung des Schlosses 28 erfolgt durch eine Antriebseinrichtung 31 (Fig. 11), die einen am vorderen Trägerteil 24 angeordneten Hydraulikzylinder 32 aufweist, der über eine Antriebskinematik 33 den Riegelhaken 29 betätigt. Die Antriebseinrichtung 31 ist auch mit dem hinteren Dachteil 4 gekoppelt und führt dessen Verstellbewegung aus.

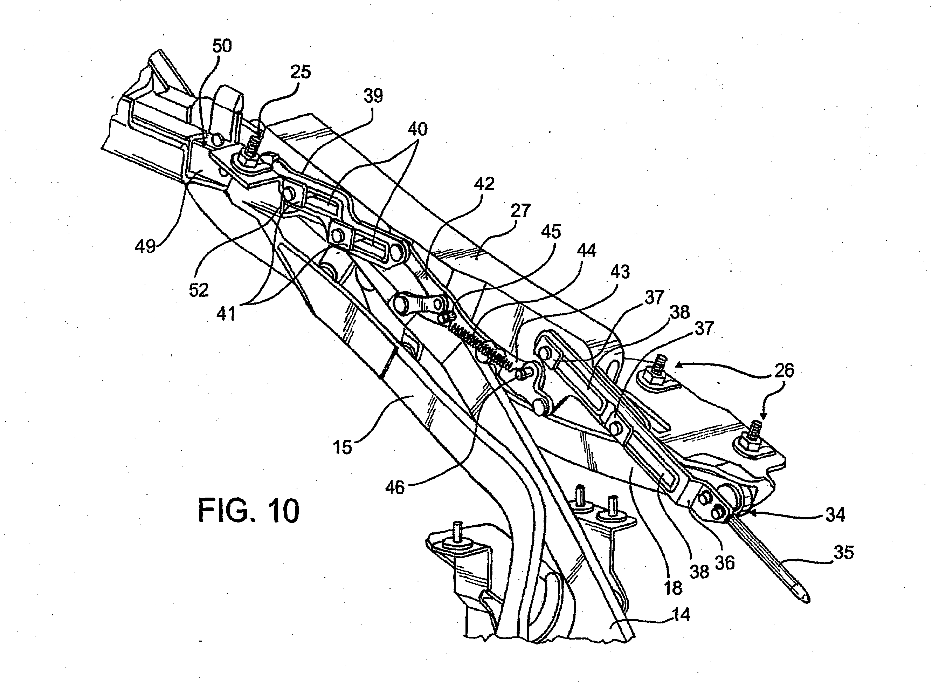

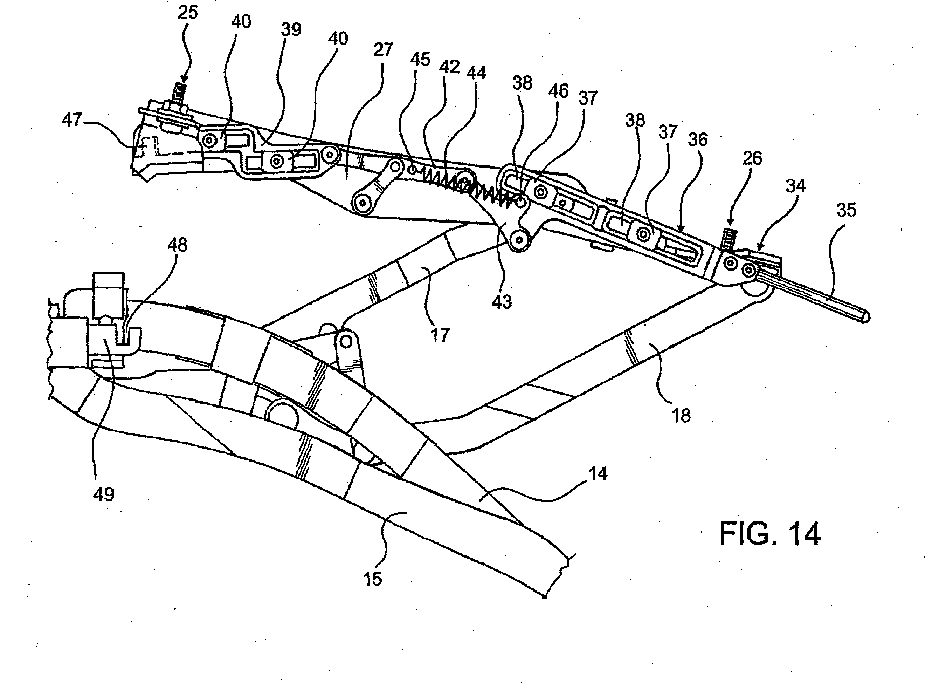

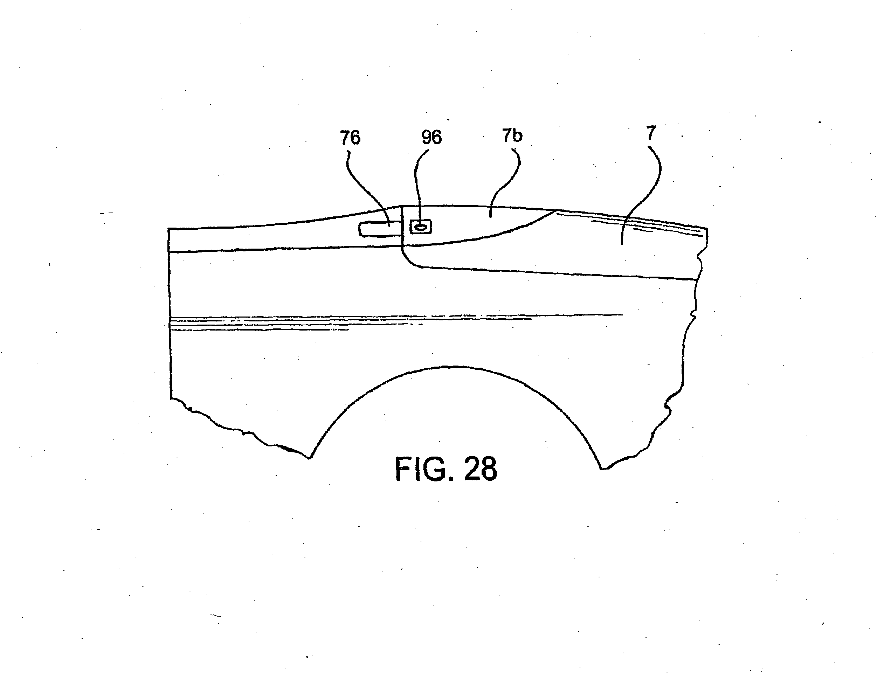

Die Riegeleinrichtung des Faltdaches 2 enthält des weiteren ein hinteres Schloß 34 (siehe z. B. Fig. 9), das einen am hinteren Trägerteil 27 translatorisch bewegbar angeordneten Riegelstift 35 aufweist (siehe Fig. 10 und 14), der zum Riegeleingriff in den geschlossene Verdeckkastendeckel 7b vorgesehen ist. Fig. 28 zeigt eine Öffnung 96 im Verdeckkastendeckel 7b (das Dach ist im Verdeckablageraum 8 abgelegt), die als Riegelaufnahme für den Riegelstift 35 gebildet ist. Der Riegelstift 35 ist an einem Schieber 36 angebracht oder integraler Teil des Schiebers 36 und erstreckt sich von diesem nach hinten. Der Schieber 36 ist an dem hinteren Trägerteil 27 verschiebbar gelagert, beispielsweise mittels einer Führungseinrichtung, die zwei am hinteren Trägerteil 27 angebrachte Gleitelemente 37 aufweist, die an zwei zugeordneten Führungsbahnen 38 verschiebbar aufgenommen sind, die z. B. in Form von Langlöchern am Schieber 36 gebildet sind.

Am Vorderabschnitt des hinteren Trägerteils 27 ist ein vorderer Schieber 39 verschiebbar gelagert, z. B. entsprechend dem hinteren Schieber 36 mittels zweier am vorderen Schieber 39 insbesondere als Langlöcher gebildeter Führungsbahnen 40, die an zwei seitlich am hinteren Trägerteil 27 befestigten Gleitelementen 41 verschiebbar gelagert sind. Eine Lenkerkette mit den Lenkern 42 und 43 koppelt den vorderen Schieber 39 mit dem hinteren Schieber 36. Eine Zugfeder 44 spannt den hinteren Schieber 36 entgegen der Schließrichtung des Riegelstiftes 35, in der der Riegelstift 35 nach hinten ausgefahren ist, vor. Die Zugfeder 44 ist beispielsweise zwischen den beiden Lenkern 42 und 43 an jeweiligen Befestigungspunkten oder -stiften 45 bzw. 46 oder zwischen dem hinteren Schieber 36 und dem hinteren Trägerteil 27 eingespannt und kann auch derart angeordnet sein, dass der Riegelstift 35 sowohl in Offenstellung wie auch in Schließ- oder Riegelstellung vorgespannt ist.

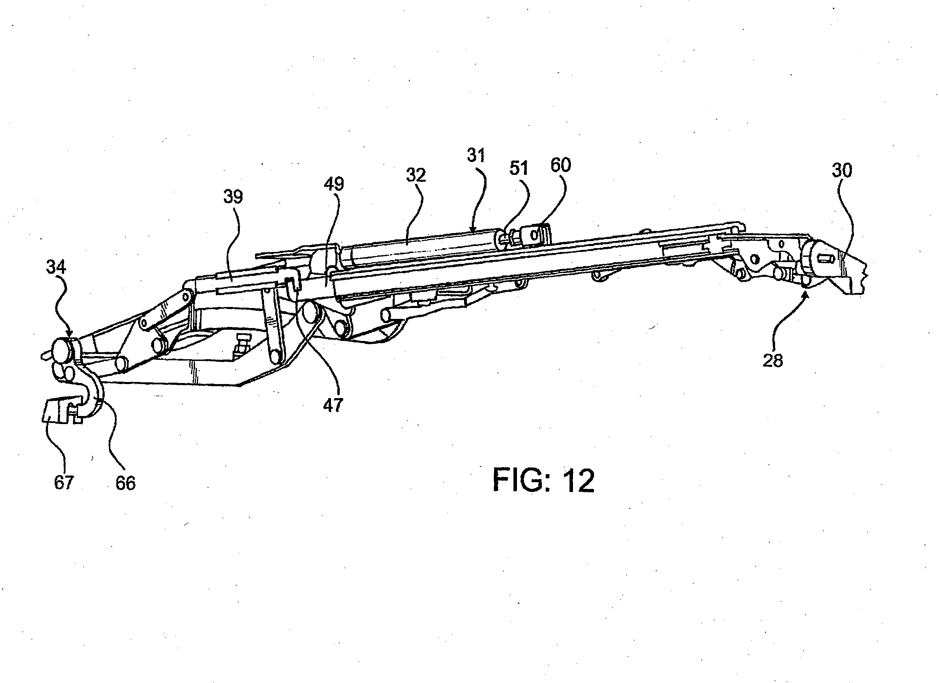

Der vordere Schieber 39 enthält an seinem Vorderende ein abwärts gerichtetes hakenförmiges Kupplungsteil 47 (siehe Fig. 12 und 14), das bei geschlossenem hinteren Dachteil 4 in eine nach oben geöffnete Kupplungsausnehmung 48 kuppelnd eingreift, die am Hinterende eines Antriebsschiebers 49 der am vorderen Dachteil 3 bzw. dem vorderen Trägerteil 24 angeordneten Antriebseinrichtung 31 gebildet ist. Der Antriebsschieber 49 ist an einer Längsführung 50 des vorderen Trägerteils 24 verschiebbar aufgenommen und mit einer Kolbenstange 51 der Antriebseinrichtung 31 fest verbunden, die gegenüber dem am vorderen Trägerteil 24 fest angebrachten Hydraulikzylinder 32 verfahrbar ist.

Bei geschlossenem Dach (Fig. 1) ist die Kolbenstange 51 in ihrer Ausgangsstellung angeordnet (siehe Fig. 9 rund 11), in der sie in den Hydraulikzylinder 32 eingefahren ist. Der Antriebsschieber 49 ist in seiner hinteren Endstellung und hält über den vorderen Schieber 39 und den angekoppelten hinteren Schieber 36 den Riegelstift 35 in seiner nach hinten ausgefahrenen Riegelstellung, in der er das hintere Dachteil 4 am Verdeckkastendeckel 7b oder einem als Riegelgegenstück geeigneten Bauteil verriegelt hält.

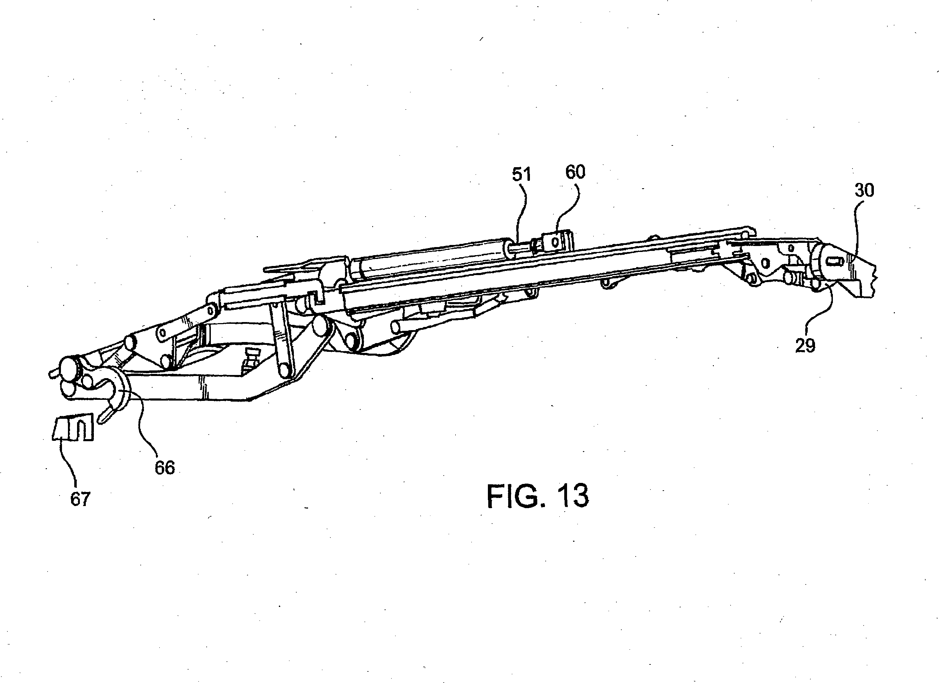

Um beim Öffnungsvorgang des Faltdaches 2 das hintere Dachteil 4 über das vordere Dachteil 3 zu verschwenken (Bewegung aus der Stellung gemäß Fig. 1 über die Stellung gemäß Fig. 3 in die Stellung gemäß Fig. 4), wird zunächst die Kolbenstange 51 ausgefahren (siehe Bewegung von Fig. 12 in eine Zwischenstellung gemäß Fig. 13). Bei dieser Bewegung wird der Antriebsschieber 49 nach vorne bewegt, wobei sein die Kupplungsausnehmung 48 enthaltendes Hinterende aus einem Riegeleingriff am hinteren,Dachteil 4 bewegt wird. Im Riegeleingriff ist das Hinterende des Antriebsschiebers 49 unmittelbar über ein Halteblech 52 ausgefahren (Fig. 10), das am hinteren Trägerteil 27 seitlich neben dem vorderen Schieber 39 absteht und an seinem abgekröpften Ende die vordere Befestigungsstelle 25 für das hintere Dachschalenteil 21 enthält. Das Hinterende des Antriebsschiebers 49 verhindert damit ein ungewolltes Anheben des hinteren Trägerteils 27 und damit des hinteren Dachteils 4 bei geschlossenem Dach 2.

Während der Antriebsschieber 49 anfänglich nach vorne bewegt wird, wird auch über den vorderen Schieber 39 und den angekoppelten hinteren Schieber 36 der Riegelstift 35 aus seiner nach hinten ausgefahrenen Riegelstellung nach vorne bewegt, so dass der Hinterrand des hinteren Dachteils 4 aus seiner Verriegelung freigegeben ist und das hintere Dachteil 4 angehoben werden kann, wobei das Kupplungsteil 47 aus der Kupplungsausnehmung 48 angehoben wird.

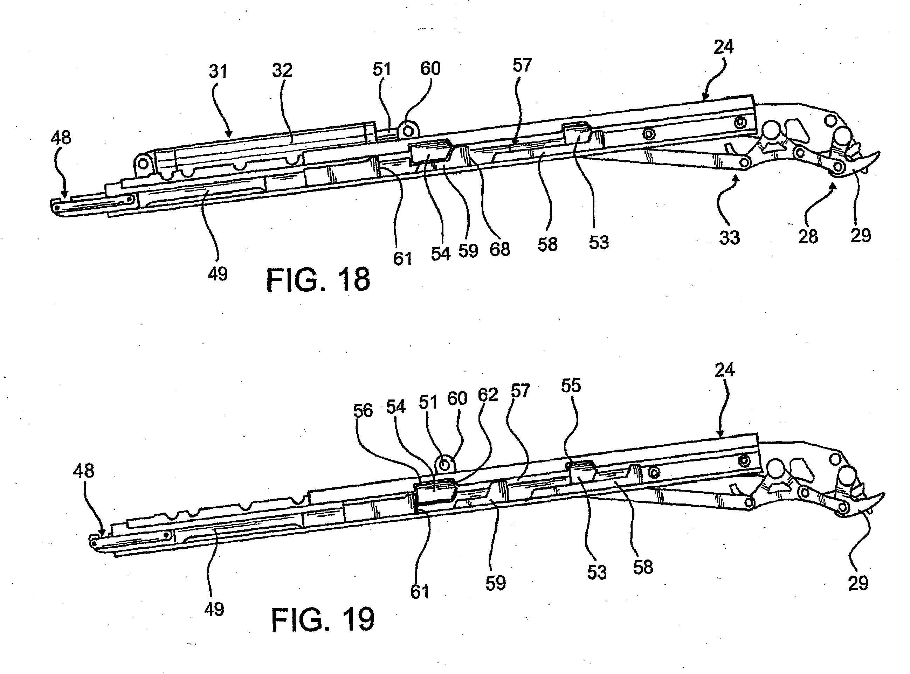

Eine in den Fig. 18 bis 21 dargestellte Riegelsteinmechanik ist zum An- und Abkoppeln der Betätigung des hinteren Dachteils 4 und des vorderen Schlosses 28 an die Antriebseinrichtung 31 bzw. deren Kolbenstange 51 vorgesehen und enthält einen vorderen Riegelstein 53 und einen hinteren Riegelstein 54 in an sich bekannter Anordnung, die in der Ausgangsstellung gemäß Fig. 18 in zugeordneten Ausnehmungen 55 bzw. 56 aufgenommen sind, die an einer Gleitführung 57 nach oben hin ausgebildet sind. An der am vorderen Trägerteil 24 angebrachten Gleitführung 57 sind die beiden Riegelsteine 53 und 54 in Längsrichtung verschiebbar, wenn sie aus ihrer Sperrstellung in der jeweiligen Ausnehmung 55 bzw. 56 abgesenkt sind. Der vordere Riegelstein 53 ist über die Antriebskinematik 33 mit dem Riegelhaken 29 des vorderen Schlosses 28 gekoppelt und der hintere Riegelstein 54 ist über eine Kinematikeinrichtung mit einem der Lenker des hinteren Dachteils 4, z. B. dem hinteren Lenker 18, zur Bewegungssteuerung des hinteren Dachteils 4 gekoppelt.

Die Riegelsteinmechanik enthält des weiteren ein dem vorderen Riegelstein 53 zugeordnetes vorderes Steuerteil 58 und ein dem hinteren Riegelstein 54 zugeordnetes hinteres Steuerteil 59, die an der Gleitführung 57 verschiebbar gelagert sind und mit dem Antriebsschieber 49 zur gemeinsamen Bewegung fest verbunden oder an diesem angebracht sind.

In der Ausgangsstellung gemäß Fig. 18, in der die Kolbenstange 51 in den Hydraulikzylinder 32 eingefahren ist, sind die beiden Steuerteile 58 und 59 unter den zugeordneten Riegelsteinen 53 bzw. 54 angeordnet und halten diese in den Ausnehmungen 55 und 56 in ihren Sperrstellungen, in denen sie in Längsrichtung entlang der Gleitführung 57 festgelegt sind.

Beim Ausfahren der Kolbenstange 51 (in den Fig. 18 bis 21 ist statt der Kolbenstange 51 eine Verbindung 60 der Kolbenstange 51 mit dem Antriebsschieber 49 dargestellt) liegt in der in Fig. 19 dargestellten Zwischenstellung ein mit der Kolbenstange 51 bzw. dem Kupplungsschieber 49 verbundene hinterer Anschlag 61 an dem hinteren Riegelstein 54 an, während das hintere Steuerteil 59 soweit nach vorne vor den hinteren Riegelstein 54 verlagert ist, dass es diesen an einer Absenkbewegung aus der Ausnehmung 56 nicht mehr hindern kann. Der hintere Riegelstein 54 ist jedoch noch z. B. durch eine Federeinrichtung (nicht dargestellt) nach oben in die Ausnehmung 56 elastisch vorgespannt. Der vordere Riegelstein 53, der gleichfalls durch eine Federeinrichtung nach oben in seine Ausnehmung 55 elastisch vorgespannt sein kann, ist durch das vordere Steuerteil 58 weiterhin unterseitig abgestützt und gegen Absenken aus der Ausnehmung 55 gesperrt.

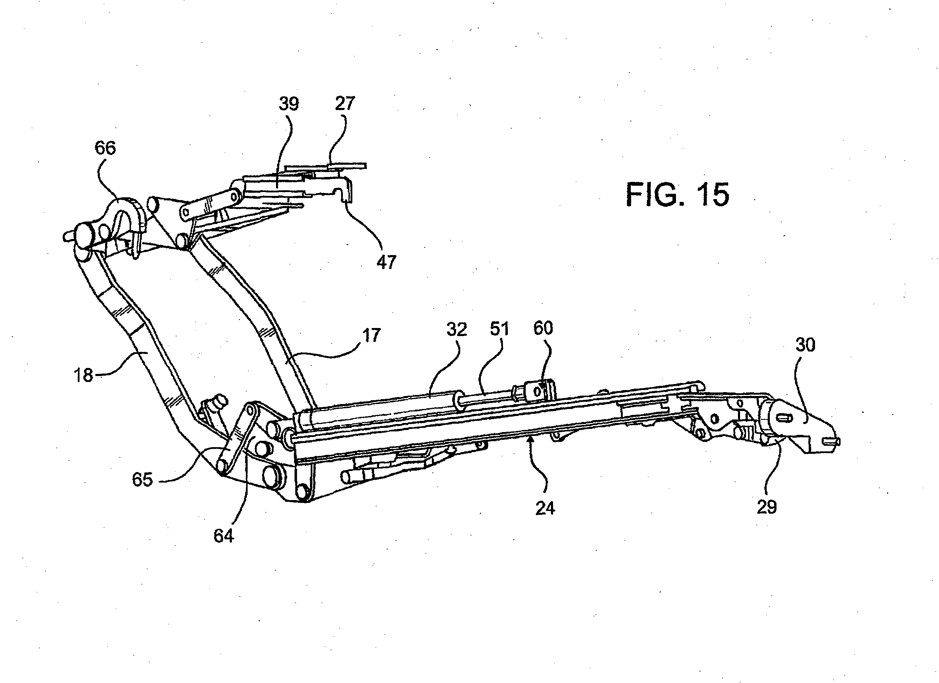

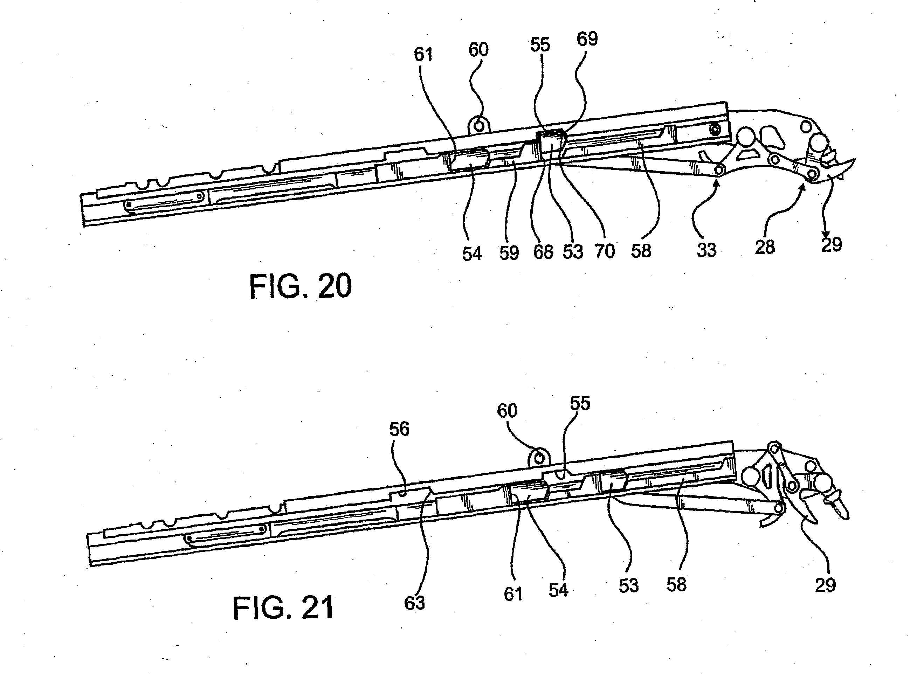

Beim weiteren Ausfahren der Kolbenstange 51 (Fig. 19 nach Fig. 20 bzw. Fig. 13 nach Fig. 15) drückt der Anschlag 61 den hinteren Riegelstein 54 aufgrund zweier einander zugeordneter schrägen Flächen 62 und 63 an der Vorderseite des hinteren Riegelsteins 54 bzw. an der hinteren Ausnehmung 56 aus der hinteren Ausnehmung 56 nach unten in die Gleitführung 57 und nimmt den hinteren Riegelstein 54 in Bewegungsrichtung mit. Dabei wird über die Kinematikeinrichtung, die z. B. zwei Lenker 64 und 65 (siehe Fig. 15) enthält, das hintere Dachteil 4 über das vordere Dachteil 3 verschwenkt. Wie schon erläutert worden ist, ist zuvor das hintere Schloss 34 durch die Bewegung des Antriebsschiebers 49 entriegelt worden.

Die Fig. 11, 13 und 15, 16 zeigen eine zu dem Riegelstift 35 alternative oder auch zusätzliche Verriegelungseinrichtung des hinteren Schlosses 34 mit einem schwenkbar gelagerten Riegelhaken 66, der bei ansonsten vergleichbarer Funktionalität an einem Gegenlager 67, das am Verdeckkastendeckel 7b oder an einem festen oder zumindest zeitweise feststehenden Bauteil des Fahrzeugs angeordnet ist, in Riegelstellung verstellbar ist.

In der in Fig. 20 dargestellten Zwischenstellung liegt ein zweiter vorderer Anschlag 68, der am hinteren Steuerteil 59 in Bewegungsrichtung vorderseitig gebildet ist, an dem zweiten vorderen Riegelstein 53 an, der bisher in seiner Stellung in der Ausnehmung 55 unverändert geblieben ist. Das vordere Steuerteil 58, das bisher den vorderen Riegelstein 53 in der Ausnehmung 55 und damit gegen eine Längsverlagerung gesperrt gehalten hat, ist jetzt soweit nach vorne verlagert, dass es vor dem vorderen Riegelstein 53 angeordnet ist und damit der vordere Riegelstein 53 aus der Ausnehmung 55 mittels zweier schräger Flächen 69 und 70, die denjenigen am hinteren Riegelstein 54 entsprechen, abgesenkt werden kann.

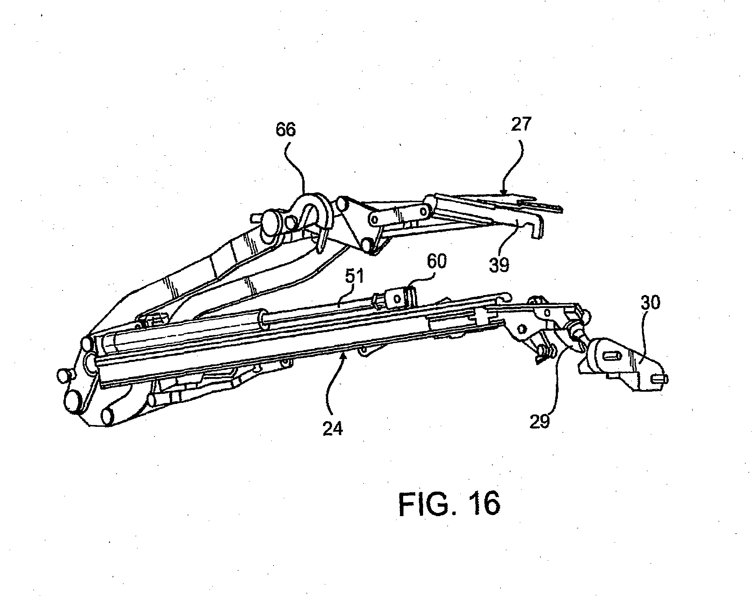

Bei der weiteren Bewegung der Kolbenstange 51 (bzw. der Verbindung 60) in die vollständig ausgefahrene Endstellung (Bewegung von Fig. 20 nach Fig. 21) wird zunächst der vordere Riegelstein 53 aufgrund der beiden schrägen Flächen 69 und 70 aus der Ausnehmung 55 nach unten in die Gleitführung 57 gedrückt und im weiteren Verlauf nach vorne bewegt, wobei über die Antriebskinematik 33 der Riegelhaken 29 des vorderen Schlosses 28 betätigt und in die Offenstellung verschwenkt wird. Gleichzeitig wird über den hinteren Riegelstein 54 das hintere Dachteil 4 in seine vollständige Offenstellung über dem vorderen Dachteil 3 verschwenkt (siehe Fig. 4 und 16).

Durch Betätigung eines Hydraulikzylinders 71 eines Hauptantriebs 72 des Faltdaches 2 und eine zwischengeschaltete Kinematik 73 wird nun das die Hauptsäule 15 und den Hauptienker 16 enthaltende Hauptviergelenk verschwenkt, so dass das aus dem vorderen Dachteil 3 und dem hinteren Dachteil 4 gebildete Dachpaket nach hinten in den Verdeckablageraum 8 verschwenkt werden kann (Fig. 6 und 7), woraufhin der Verdeckkastendeckel 7b geschlossen wird (Fig. 8).

Die Schließbewegung des Daches 2 aus seiner geöffneten abgelegten Stellung in seine Schließstellung verläuft in entgegengesetztem Bewegungsablauf.

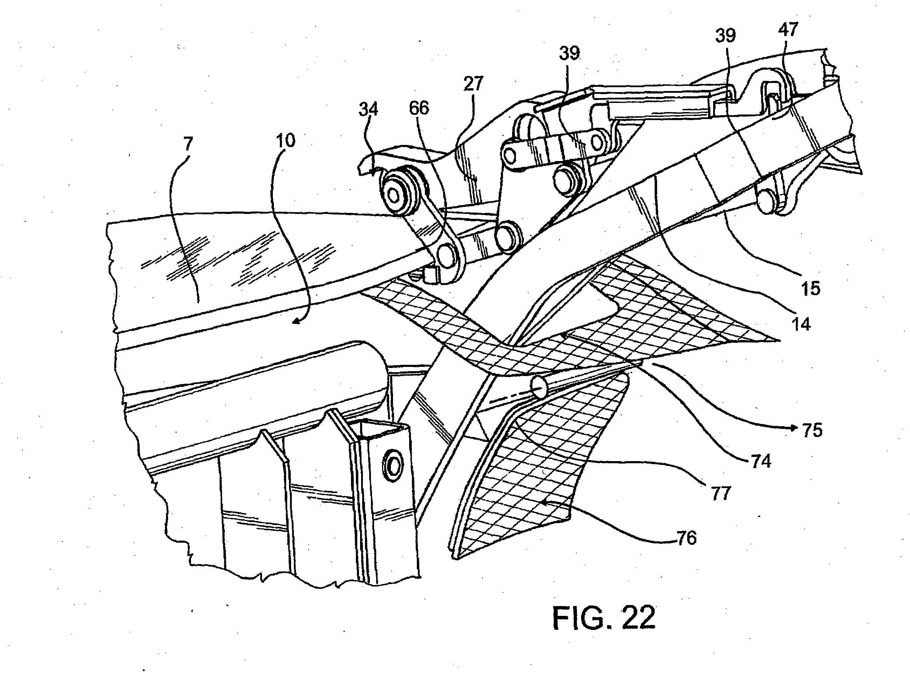

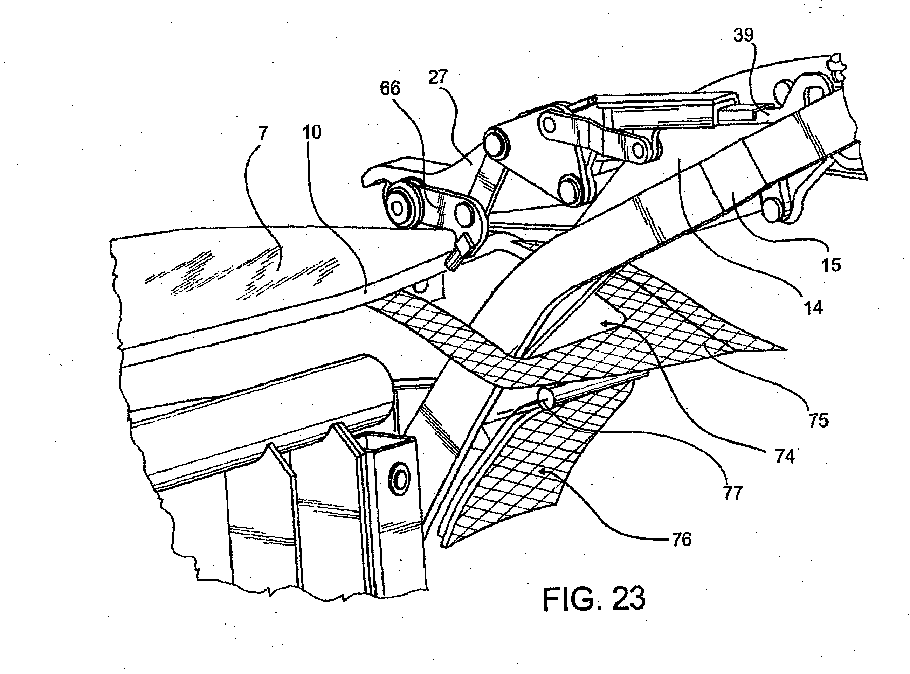

Die Figuren 22 und 23 zeigen die Verriegelung des hinteren Schlosses 34 an dem Verdeckkastendeckel 7b in der Variante mit dem verschwenkbaren Riegelhaken 66. Bei geschlossenem Dach 2 erstrecken sich der Hauptlenker 14 und die Hauptsäule 15 der Dachkinematik 13 durch eine nach hinten geöffnete Ausnehmung 74 in einem Verkleidungs- oder Abdeckteil 75. Eine Gestängeklappe 76 ist um eine Schwenkachse 77 schwenkbar gelagert und derart angeordnet, dass sie bei in den Verdeckablageraum 8 abgelegtem Dach 2 die Ausnehmung 74 abdeckt, indem sie nach oben an oder in die Ausnehmung 74 geschwenkt ist, z. B. durch eine elastische Vorspannung mit einer Feder oder dergleichen (nicht dargestellt) oder durch eine Antriebseinrichtung, und deckt damit die Ausnehmung 74 ab.

Bei geschlossenem Dach 2 ist die Gestängeklappe 76 nach unten geschwenkt und gibt die Ausnehmung 74 für das Gestänge bzw. den Hauptlenker 14 und die Hauptsäule 15 wieder frei. Das Verschwenken der Gestängeklappe 76 kann durch das Gestänge bzw. den Hauptlenker 14 und/oder die Hauptsäule 15 selbst erfolgen, indem die Gestängeklappe 76 gegen ihre Vorspannung herabgedrückt wird, oder eine Antriebseinrichtung bzw. ein anderes Antriebsteil übernimmt die Verstellung.

Der Riegelhaken 66 ist mittels der Antriebskinematik in seine Riegelstellung verschwenkt, in der er den Vorderrand 1,0 des Verdeckkastendeckels 7b umgreift und daran fest anliegt. Da der Riegelhaken 66 unmittelbar an dem hinteren Trägerteil 27 des hinteren Dachteils 4 angelenkt ist, ergibt sich eine stabile Verriegelung an dem Verdeckkastendeckel 7b.

Beim Entriegeln wird der Riegelhaken 66 in der beschriebenen Weise betätigt (siehe Fig. 23). Eine Feder (nicht dargestellt) hält den Riegelhaken 66 in seine beiden Endstellungen vorgespannt, wobei die Feder am Riegelhaken 66 oder an zumindest einem der Lenker der Antriebskinematik befestigt sein kann.

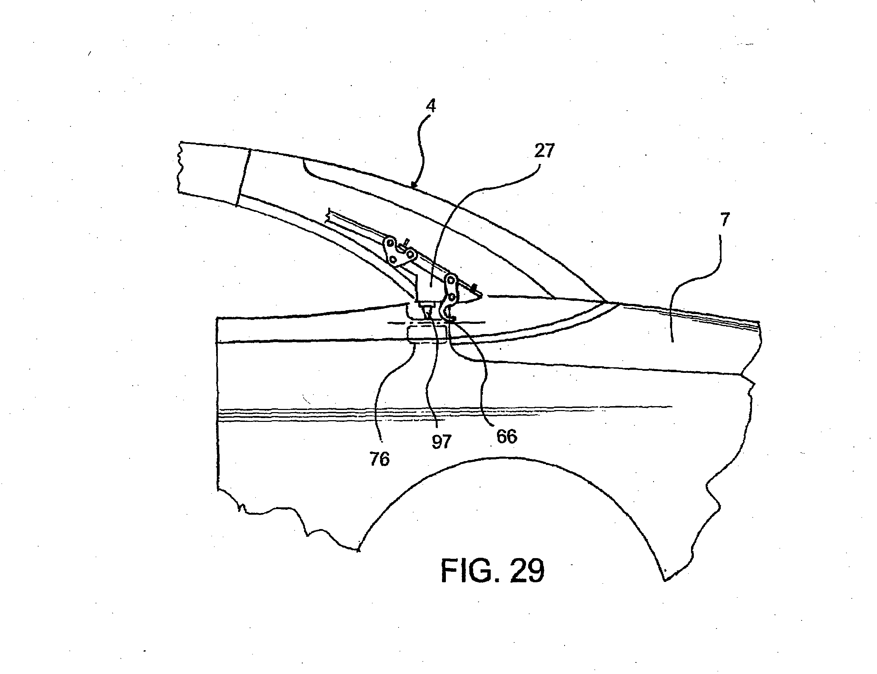

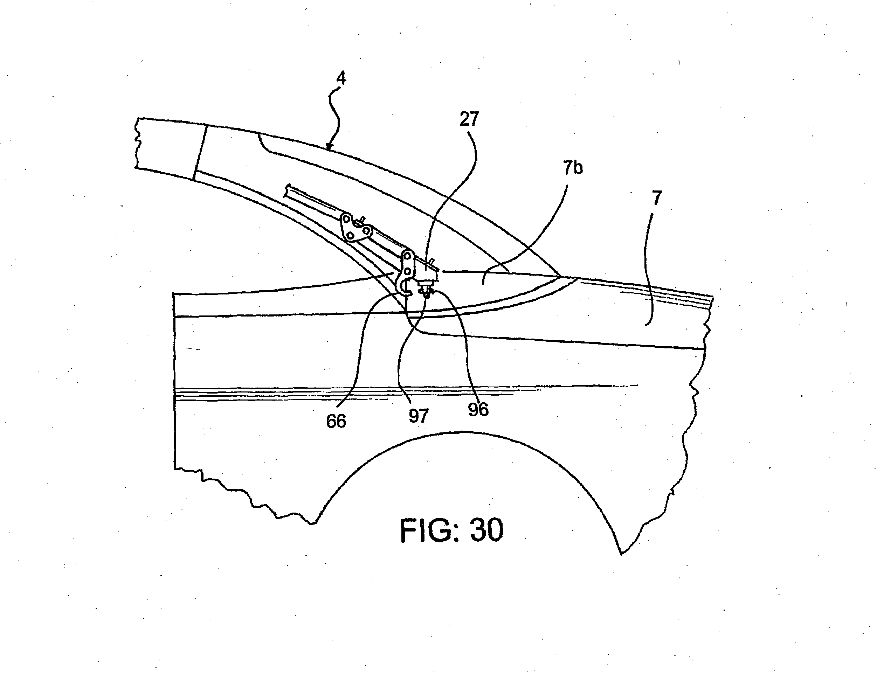

Bei der in den Fig. 29 und 30 dargestellten Variante der Verriegelungseinrichtung ist der Riegelhaken 66 im Riegeleingriff am Vorderrand 10 des Verdeckkastendeckels 7b dargestellt. Zusätzlich ist ein z. B. am hinteren Trägerteil 27 im Bereich des Riegelhakens 66 angeordneter Zentrierstift 97 vorgesehen, der bei geöffneter Gestängeklappe 76 durch die Ausnehmung 74 greift und an der Karosserie, einem Gestängeteil oder einem sonstigen festen Gegenlager in verrastetem oder zentriertem Lagereingriff ist. Hierdurch hält die Verriegelungseinrichtung das geschlossene Dach stabil in seiner Schließstellung. Der Zentrierstift 97 kann auch derart angeordnet sein, dass er in die Öffnung 96 im Verdeckkastendeckel 7b oder eine gleichwertige ein Gegenlager bildende Öffnung eingreift, wenn auf den Riegelstift 35 verzichtet wird.

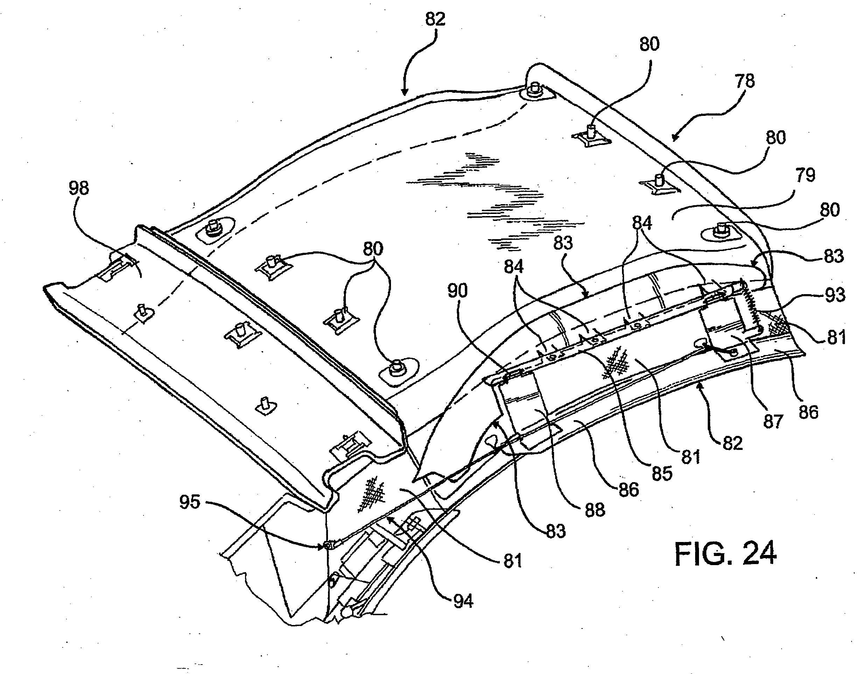

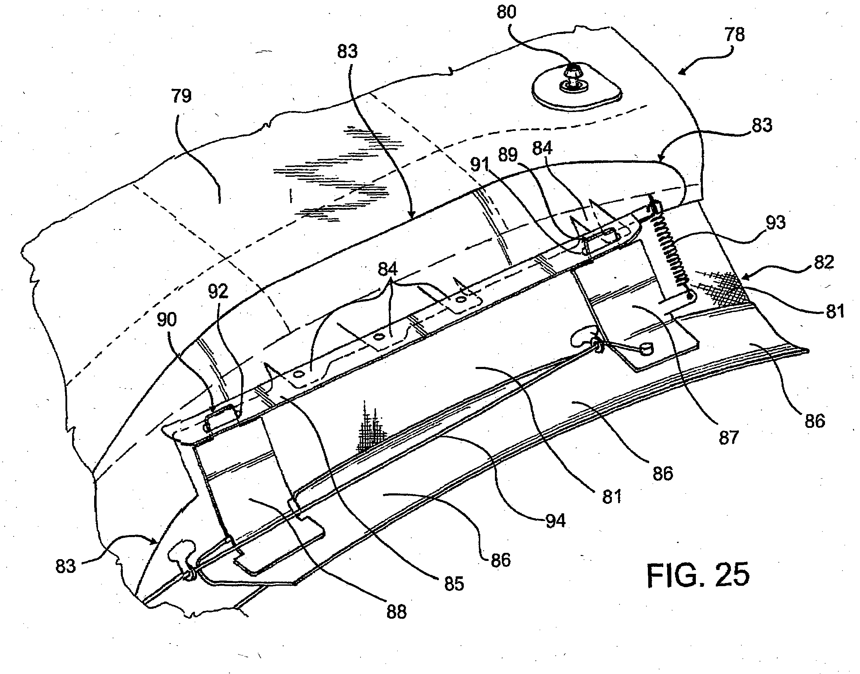

Ein Innenhimmel 78 des Daches 2 (siehe Fig. 24 und 25) ist als ein Modul mit unterschiedlichen integrierten Komponenten gebildet. Ein zentraler Bereich des Innenhimmels 78 enthält ein Formteil 79 als tragende Struktur, das mehrere Befestigungsteile 80 wie z. B. nach oben ragende Clipse oder dergleichen enthält, die beispielsweise in einer vorderen und einer hinteren Querreihe angeordnet sind und bei der Montage des Innenhimmels 78 an das vordere Dachteil 3 in entsprechende Gegenlager an dem Dachschalenteil 20 des vorderen Dachteils 3 eingreifen und daran festgelegt werden. An der dem Fahrzeuginnenraum zugewandten Unterseite des Formteils 79 ist eine Himmelverkleidung z. B. in der Art eines Himmelstoffes 81 angebracht.

Ein rechter und ein linker Seitenbereich 82 des Innenhimmels 78 ist jeweils gegenüber dem Mittelteil bzw. Formteil 79 schwenkbar gebildet. Seitlich am Formteil 79 ist jeweils eine Verstärkung 83 angebracht, die mehrere Zungen 84 enthält, die sich in etwa horizontal nach außen erstrecken. An den Zungen 84 ist ein längliches steifes Trägerteil 85 in Längsausrichtung befestigt. Ein längliches Stützteil 86 ist an dem seitlichen äußeren Randabschnitt des Himmelstoffes 81 oberseitig befestigt, wobei es von dem zentralen Formteil 79 bzw. der Verstärkung 83 beabstandet ist. Das Stützteil 86 ist mittels einer Lagereinrichtung an dem Trägerteil 85 bewegbar und insbesondere um eine Längsachse schwenkbar gelagert. Die Lagereinrichtung enthält beispielsweise ein vorderes Scharnierteil 87 und eine hinteres Scharnierteil 88, die einerseits mit dem Stützteil 86 fest verbunden sind und andererseits an dem Trägerteil 85 scharnierartig um eine Lager- oder Schwenkachse schwenkbar gelagert sind. Das jeweilige Gelenk oder Scharnier ist z. B von einer Zunge 89 bzw. 90 am Scharnierteil 87 bzw. 88 gebildet, die in einer zugeordneten Öffnung oder Vertiefung 91 bzw. 92 des Trägerteis 85 verschwenkbar aufgenommen ist. Die Scharnierteile 87, 88 sind z. B. Blechformteile.

Eine Zugfede 93 verbindet derart das Trägerteil 85 mit z. B. dem vorderen Scharnierteil 87, dass das Stützteil 86 in seine beiden Schwenkendlagen vorgespannt ist, nämlich einerseits nach oben bzw. auswärts in eine Stellung, in der es bei geschlossenem Dach 2 im wesentlichen unter dem Verdeckgestänge angeordnet ist und der Himmelstoff 81 zwischen dem Formteil 79 und dem Stützteil 86 gespannt angeordnet ist, und andererseits nach unten bzw. einwärts in eine Stellung, die es einnimmt, nachdem das Dach 2 in seine Ablagestellung verstellt worden ist und das Verdeckgestänge den seitlichen Bereich des Innenhimmels 78 bzw. das Stützteil 86 einwärts gedrückt hat.

Ein Seilzug 94 zum Schließen des klappenartigen Seitenbereichs 82 des Innenhimmels ist an dem Stützteil 86 und insbesondere an dem vorderen Scharnierteil 87 befestigt und derart umgelenkt und geführt, dass es bei Zugbelastung den klappenartigen Seitenbereich 82 in die ausgeschwenkte Stellung bei geschlossenem Dach 2 bewegt. Das andere Ende 95 des Seilzugs 94 ist z. B. an dem Verdeckgestänge bzw. der Dachkinematik befestigt (nicht dargestellt) und wird durch dieses beim Schließen des Daches 2 in Zugrichtung belastet, um den klappenartigen Seitenbereich 82 zu bewegen. Andererseits kann das andere Ende 95 des Seilzugs 94 auch an einer dachfesten oder himmelfesten Stelle befestigt sein und der Seilzug 94 wird vor dem Ende 95 durch ein Betätigungsteil ausgelenkt, wodurch das Verschwenken des Seitenbereichs 82 erfolgt.

In alternativer Gestaltung spannt die Feder 93 das Scharnierteil 87 stets in Richtung seiner Offenstellung vor und der Seilzug 94 zieht das Scharnierteil 87 in seine Schließrichtung.

Der Innenhimmel 78 kann zusätzlich auch an dem Verdeckgestänge bzw. der Dachkinematik befestigt werden. Der Innenhimmel 78 kann am Vorderabschnitt des hinteren Dachteils 4 ebenfalls mit Clipsen befestigt sein. Bei geschlossenem Dach grenzt das Formteil 79 rückseitig an ein Himmelteil 98 des hinteren Dachteils 4 an, das z. B. ein festes Verkleidungsteil ist, das ebenfalls mittels Clipsverbindungen am hinteren Dachteil 4 befestigt ist.

**Bezugszeichenliste**

| | | | |
|---|---|---|---|
| 1 | Cabriolet | 27 | hinteres Trägerteil |
| 2 | Faltdach | 28 | vorderes Schloß |
| 3 | vorderes Dachteil | 29 | Riegelhaken |
| 4 | hinteres Dachteil | 30 | Gegenlager |
| 5 | Windlauf | 31 | Antriebseinrichtung |
| 6 | Frontscheibe | 32 | Hydraulikzylinder |
| 7 | Kofferraumdeckel | 33 | Antriebskinematik |
| 7a | Träger | 34 | hinteres Schloß |
| 7b | Verdeckkastendeckel | 35 | Riegelstift |
| 8 | Verdeckablageraum | 36 | hinterer Schieber |
| 9 | Lagereinrichtung | 37 | Gleitelement |
| 9a | Lagereinrichtung | 38 | Führungsbahn |
| 10 | Vorderrand | 39 | vorderer Schieber |
| 11 | Hinterrand | 40 | Führungsbahn |
| 12 | Kofferraum | 41 | Gleitelement |
| 13 | Dachkinematik | 42 | Lenker |
| 14 | Hauptlenker | 43 | Lenker |
| 15 | Hauptsäule | 44 | Zugfeder |
| 16 | Hauptlager | 45 | Befestigungspunkt |
| 17 | vorderer Lenker | 46 | Befestigungspunkt |
| 18 | hinterer Lenker | 47 | Kupplungsteil |
| 19 | Hutablage | 48 | Kupplungsausnehmung |
| 20 | vorderes Dachschalenteil | 49 | Antriebsschieber |
| 21 | hinteres Dachschalenteil | 50 | Längsführung |
| 22 | vordere Befestigungsstelle | 51 | Kolbenstange |
| 23 | hintere Befestigungsstelle | 52 | Halteblech |
| 24 | vorderes Trägerteil | 53 | vorderer Riegelstein |
| 25 | vordere Befestigungsstelle | 54 | hinterer Riegelstein |
| 26 | hintere Befestigungsstelle | 55 | Ausnehmung |
| 56 | Ausnehmung | 78 | Innenhimmel |
| 57 | Gleitführung | 79 | Formteil |
| 58 | vorderes Steuerteil | 80 | Befestigungsteil |
| 59 | hinteres Steuerteil | 81 | Himmelstoff |
| 60 | Verbindung | 82 | Seitenbereich |
| 61 | hinterer Anschlag | 83 | Verstärkung |
| 62 | schräge Fläche | 84 | Zunge |
| 63 | schräge Fläche | 85 | Trägerteil |
| 64 | Lenker | 86 | Stützteil |
| 65 | Lenker | 87 | vorderes Scharnierteil |
| 66 | Riegelhaken | 88 | hinteres Scharnierteil |
| 67 | Gegenlager | 89 | Zunge |
| 68 | vorderer Anschlag | 90 | Zunge |
| 69 | schräge Fläche | 91 | Vertiefung |
| 70 | schräge Fläche | 92 | Vertiefung |
| 71 | Hydraulikzylinder | 93 | Zugfeder |
| 72 | Hauptantrieb | 94 | Seilzug |
| 73 | Kinematik | 95 | Ende |
| 74 | Ausnehmung | 96 | Öffnung |
| 75 | Verkleidungs- oder Abdeckteil | 97 | Zentrierstift |
| 76 | Gestängeklappe | 98 | Himmelteil |
| 77 | Schwenkachse | | |

## Patentansprüche

1. Hardtop-Faltdach mit zumindest einem hinteren Dachteil, das ein starres Dachschalenteil (21) aufweist und mittels einer Dachkinematik (13, 24, 27) zwischen einer Schließstellung und einer Ablagestellung bei geöffnetem Faltdach (2) verstellbar ist,
und mit zumindest einer Funktionseinrichtung, die ausschließlich an der Dachkinematik (13, 24, 27) angebracht ist, an der auch das Dachschalenteil (20 bzw. 21) montiert ist,
**dadurch gekennzeichnet,**
**dass** die Funktionseinrichtung zumindest eine Verriegelungseinrichtung (66) oder ein Schloss (34) darstellt, die bzw. das das hintere Dachteil (4) des Faltdaches (2) an einer heckseitigen Fahrzeugstruktur oder einem Verdeckkastendeckel (7b) in Schließstellung des hinteren Dachteils (4) festlegt.

2. Hardtop-Faltverdeck nach Anspruch 1,
**dadurch gekennzeichnet, dass** die Verriegelungseinrichtung bzw. das Schloss zumindest ein bewegbares Stellelement (35, 36) enthält.

3. Hardtop-Faltverdeck nach Anspruch 1 oder 2,
**dadurch gekennzeichnet, dass** die Funktionseinrichtung zumindest eine Antriebseinrichtung oder eine Verstelleinrichtung darstellt.

4. Hardtop-Faltverdeck nach Anspruch 3,
**dadurch gekennzeichnet, dass** die Verstelleinrichtung eine Innenabdeckung oder ein verstellbares Innenhimmelteil betätigt.

5. Hardtop-Faltverdeck nach Anspruch 4,
**dadurch gekennzeichnet, dass** der Innenhimmel eine verstellbare Innenhimmel-Seitenklappe aufweist.

6. Hardtop-Faltverdeck nach einem der Ansprüche 1 bis 5,
**dadurch gekennzeichnet, dass** die Dachkinematik ein Trägerteil (24, 27) enthält, das Befestigungsstellen (22, 23, 25, 26) zum Anbringen des Dachschalenteils (20, 21) aufweist.

7. Hardtop-Faltverdeck nach einem der Ansprüche 1 bis 6,
**dadurch gekennzeichnet, dass** die Dachkinematik ein vorderes Trägerteil (24) eines vorderen Dachteils (3) und ein hinteres Trägerteil (27) des hinteren Dachteils (4) enthält, an denen das vordere Dachschalenteil (20) bzw. das hintere Dachschalenteil (21) festlegbar sind.

8. Hardtop-Faltverdeck nach Anspruch 6 oder 7,
**dadurch gekennzeichnet, dass** an dem Trägerteil (24, 27) eine Antriebsmechanik einer Schlosseinrichtung (28, 34) zum Festlegen des zumindest einen Dachteils (3, 4) angebracht ist.

## Claims

1. Retractable hardtop with at least one rear roof part which has a rigid roof shell part (21) and is adjustable by means of roof kinematics (13, 24, 27) between a closed position and a retracted position when the retractable roof (2) is open, and with at least one functional device which is fitted exclusively to the roof kinematics (13, 24, 27), on which the roof shell part (20 or 21) is also mounted, **characterized in that** the functional device constitutes at least one locking device (66) or a lock (34), which locking device or lock fixes the rear roof part (4) of the retractable roof (2) to a vehicle structure on the rear side or to a convertible top compartment cover (7b) in the closed position of the rear roof part (4).

2. Retractable hardtop according to Claim 1, **characterized in that** the locking device or the lock contains at least one movable actuating element (35, 36).

3. Retractable hardtop according to Claim 1 or 2, **characterized in that** the functional device constitutes at least one driving device or an adjustment device.

4. Retractable hardtop according to Claim 3, **characterized in that** the adjustment device actuates an inside covering or an adjustable inside headlining part.

5. Retractable hardtop according to Claim 4, **characterized in that** the inside head lining has an adjustable inside headlining side flap.

6. Retractable hardtop according to one of Claims 1 to 5, **characterized in that** the roof kinematics contain a carrier part (24, 27) which has fastening points (22, 23, 25, 26) for the fitting of the roof shell part (20, 21).

7. Retractable hardtop according to one of Claims 1 to 6, **characterized in that** the roof kinematics contain a front carrier part (24) of a front roof part (3) and a rear carrier part (27) of the rear roof part (4), to which the front roof shell part (20) and the rear roof shell part (21) can be fixed.

8. Retractable hardtop according to Claim 6 or 7, **characterized in that** a driving mechanism of a lock device (28, 34) for fixing the at least one roof part (3, 4) is fitted to the carrier part (24, 27).

## Revendications

1. Toit en dur rétractable, comprenant au moins une partie de toit arrière qui présente une partie de coque de toit rigide (21) et qui peut être réglée au moyen d'une cinématique de toit (13, 24, 27) entre une position de fermeture et une position de rangement lorsque le toit rétractable (2) est ouvert,
et comprenant au moins un dispositif fonctionnel qui est monté exclusivement sur la cinématique de toit (13, 24, 27), sur laquelle est également montée la partie de coque de toit (20, respectivement 21),
**caractérisé en ce que**
le dispositif fonctionnel constitue au moins un dispositif de verrouillage (66) ou une serrure (34) qui fixe la partie de toit arrière (4) du toit rétractable (2) à une structure de véhicule du côté arrière ou à un couvercle de compartiment de capote (7b) dans la position de fermeture de la partie de toit arrière (4).

2. Toit en dur rétractable selon la revendication 1, **caractérisée en ce que** le dispositif de verrouillage ou la serrure contient au moins un élément de commande déplaçable (35, 36).

3. Toit en dur rétractable selon la revendication 1 ou 2,
**caractérisée en ce que** le dispositif fonctionnel constitue au moins un dispositif d'entraînement ou un dispositif de réglage.

4. Toit en dur rétractable selon la revendication 3, **caractérisée en ce que** le dispositif de réglage actionne un recouvrement interne ou une partie d'habillage de toit interne réglable.

5. Toit en dur rétractable selon la revendication 4, **caractérisée en ce que** l'habillage interne présente un volet latéral d'habillage interne réglable.

6. Toit en dur rétractable selon l'une quelconque des revendications 1 à 5,
**caractérisée en ce que** la cinématique de toit contient une partie de support (24, 27) qui présente des points de fixation (22, 23, 25, 26) pour le montage de la partie de coque de toit (20, 21).

7. Toit en dur rétractable selon l'une quelconque des revendications 1 à 6,
**caractérisée en ce que** la cinématique de toit contient une partie de support avant (24) d'une partie de toit avant (3) et une partie de support arrière (27) de la partie de toit arrière (4), sur lesquelles peuvent être fixées la partie de coque de toit avant (20), respectivement la partie de coque de toit arrière (21).

8. Toit en dur rétractable selon la revendication 6 ou 7,
**caractérisée en ce qu'**un mécanisme d'entraînement d'un dispositif de serrure (28, 34) est monté sur la partie de support (24, 27) pour fixer l'au moins une partie de toit (3, 4).
